## Europäisches Patentamt
## European Patent Office
## Office européen des brevets

(11) Veröffentlichungsnummer: **0 040 663**
**B1**

(12) **EUROPÄISCHE PATENTSCHRIFT**

(45) Veröffentlichungstag der Patentschrift:
17.09.86

(51) Int. Cl.⁴: **G 01 N 30/02, B 01 D 15/08**

(21) Anmeldenummer: **80710015.1**

(22) Anmeldetag: **17.05.80**

(54) Säulenverschluss.

(43) Veröffentlichungstag der Anmeldung:
02.12.81 Patentblatt 81/48

(45) Bekanntmachung des Hinweises auf die Patenterteilung:
17.09.86 Patentblatt 86/38

(84) Benannte Vertragsstaaten:
**DE FR GB NL SE**

(56) Entgegenhaltungen:
DE - A - 2 348 071
DE - A - 2 524 751
DE - A - 2 655 650
DE - A - 2 739 860
US - A - 3 973 792

J. Chromatographic Science Bd. 12, Okt. 1974, S. 564-569

(73) Patentinhaber: **Vermögensverwaltungs-Kommanditgesellschaft Dr. Ing. Herbert Knauer & Co. GmbH & Cie., Hegauer Weg 38, D-1000 Berlin 37 (DE)**

(72) Erfinder: **Knauer, Herbert, Dr.Ing., Holstweg 18, D-1000 Berlin 37 (DE)**

(74) Vertreter: **Rotter, Ulrich, Dipl.-Chem. Dr., Patentanwälte Dipl.-Ing. Olaf Ruschke Dipl.-Ing. Hans E. Ruschke Dipl.-Ing. Jürgen Rost Dipl.-Chem. Dr. U. Rotter Pienzenauerstrasse 2, D-8000 München 80 (DE)**

## Beschreibung

Die Erfindung bezieht sich auf einen Verschluss für Säulen, die mit einer Säulenpackung aus einem chromatographischen oder katalytisch aktiven oder ionen- und/oder elektronenaustauschenden oder elektrophoretischen oder biologisch aktiven Material gefüllt sind, mit

– einen mit Innen- oder Aussengewinde versehenen, in bzw. auf die Säule schraubbaren Verschlussendstück,
– einer das Verschlussendstück mittig durchziehenden Kapillare,
– einer Dichteinrichtung zur Abdichtung des Inneren der Säule gegen die Umgebung.

Die Erfindung findet Anwendung auf dem Gebiet der Säulen, die mit einer chromatographischen flüssig-chromatographischen, gelchromatographischen, katalytisch aktiven, ionen- und/oder elektronenaustauschenden, elektro-phoretischen oder biologisch aktiven Säulenpackung gefüllt sind, speziell bei solchen Säulen, mit denen eine hochauflösende chromatographische Substanztrennung erreicht werden soll. Die mit dem Verschluss gemäss der Erfindung ausgerüsteten Säulen haben sich besonders bei der HPLC-Chromatographie («High Performance bzw. High Pressure Liquid Chromatography») ausserordentlich bewährt.

Chromatographische Säulen bewirken bekanntlich die Trennung der aufgegebenen Substanzen durch die unterschiedliche Verweildauer der Substanzen im Säulenbett. Die Säule wird über eine Kapillare mit dem erforderlichen Strom eines die bewegliche Phase bildenden fliessfähigen Mediums versorgt. Beim Übergang des Stroms dieses Mediums, z.B. eines Lösungsmittels, von der Kapillare in das Säulenbett kann ein Totvolumen oder es können Verwirbelungen auftreten, die nach Möglichkeit vermieden werden sollten.

Aus der Technik sind zahlreiche Säulen für chromatographische Zwecke bekannt. Sie weisen in der Regel ein das Säulenbett und ein Filter, eine Fritte oder ein Sieb aufnehmendes Säulenrohr und einen mechanisch lösbaren und das Säulenbett an mindestens einem Ende der Säule abschliessenden Verschluss auf, der von einer Kapillare durchzogen wird. Die im Handel erhältlichen Säulen haben in der Regel ein Säulenrohr aus Edelstahl oder aus Glas. Ihre Endabschlüsse, die mechanisch fixiert sind und das Säulenbett begrenzen, halten mit einer Fritte oder mit einem Sieb oder mit Glasfasern das Säulenbett im Säulenrohr fest (vgl. z.B. Firmenprospekt der Fa. Dr. Knauer GmbH «Säulen», 1978; DE-OS 2 524 751).

Die bisher bekannten Säulen, insbesondere zur Hochleistungschromatographie, haben jedoch den Nachteil einer noch unzureichenden bzw. relativ geringen Lebensdauer. Bei dem Betrieb der Säulen werden immer Spuren der das Säulenbett bildenden Säulenpackung durch das strömende Medium, z.B. das Lösungsmittel, herausgewaschen (ca. 10 µg $SiO_2$ sind in 1 Liter Wasser löslich). Dadurch ergeben sich nach längerem Gebrauch an der Einlassseite für das fliessende Medium Hohlräume, die durch das Totvolumen die Trennleistung der Säulen verschlechtern. Durch Volumenänderung und/oder durch teilweise Auflösung des Säulenbettes können im Säulenbett auch Risse auftreten, die eine schlechte Trennleistung bewirken und beispielsweise zu Doppelpeaks bei einer Substanz führen, da die Substanz durch die Risse schneller transportiert wird als durch das intakte Säulenbett. Bisher hat man sich dadurch geholfen, dass das Säulenbett mit neuem Packungsmaterial wieder aufgefüllt wurde oder dass z.B. das Lösungsmittel durch Vorsäulen bereits mit dem Packungsmaterial des Säulenbettes teilweise gesättigt wurde. Diese Techniken sind jedoch unbefriedigend, bedingen eine Unterbrechung des Säulenbetriebs und beeinträchtigen die Reproduzierbarkeit des durch die Säule erreichten Trenneffektes.

Es ist bereits vorgeschlagen worden (DE-OS 2 655 650), den beim Säulenbetrieb auftretenden Volumenschwund durch Kompression des Säulenbettes auszugleichen, indem das Säulentrennrohr aus einem Kunststoffschlauch gefertigt und von aussen Druck auf das Rohr gegeben wurde. Hierdurch wurden Volumenreste ausgeglichen und das Säulenbett in einen dicht gepackten Zustand gebracht. Aus praktischen Gründen lassen sich für diese Technik jedoch nur relativ kurze Säulen anwenden, die nur einen verhältnismässig geringen Druckabfall aufweisen. Die Verwendung eines Säulenrohrs aus Kunststoff stört ausserdem bei zahlreichen Anwendungen, da der Kunststoff oder die darin enthaltenen Zusätze, wie Weichmacher und dergl., durch Lösungsmittel angegriffen und sogar angelöst werden können.

Es sind ferner Chromatographiesäulen für präparative Zwecke bekannt, die einen einseitigen Säulenverschluss aufweisen, bei dem das Säulenbett durch Druckluft über einen mit O-Ringen abgedichteten Kolben einseitig verdichtet wird. Der praktische Nachteil dieser Konstruktion ist die Anwendung von Druckluft. Ausserdem ist das Arbeiten mit diesen Säulen konstruktionsbedingt nur für geringe Drucke anwendbar (vgl. Journal of Chromatographic Science, Bd. 12, Okt. 1974, S. 564–569).

Der Erfindung liegt die Aufgabe zugrunde, die Qualität und Lebensdauer von für chromatographische Zwecke eingesetzten Säulen durch einen neuartigen Verschluss zu verbessern, der ohne aussenseitige Druckeinwirkung den Volumenschwund beim Gebrauch der Säule durch Kompression des Säulenbettes ausgleicht, Totvolumina in der Säule möglichst klein hält und die Säule nach aussen hin hermetisch abdichtet.

Zur Lösung dieser Aufgabe wird der im Oberbegriff des Anspruchs 1 gattungsgemäss bezeichnete Verschluss für Säulen vorgeschlagen, bei dem
– ein sich an dem Verschlussendstück abstützender Federmechanismus vorgesehen ist, der ein am Austrittsende der Kapillare konzentrisch zu dieser befestigtes starres Abschlussteil für die Säulenpackung sowie ein zwischen dem Verschlussendstück und dem Abschlussteil ebenfalls konzentrisch bezüglich der Kapillare angeordnetes Federelement aufweist, mittels dessen das Abschlussteil beim Auf- bzw. Einschrauben des Verschlussendstücks derart belastbar ist, dass der über das Abschlussteil auf die Säulenpackung ausgeübte Druck grösser als deren Arbeitsdruck ist, und

– die Dichteinrichtung eine Dichtung aus kompressiblem Kunststoff aufweist, die konzentrisch bezüglich der Kapillare derart zwischen dem Verschlussendstück und dem Abschlussteil angeordnet ist, dass sie beim Auf- bzw. Einschrauben des Verschlussendstücks unter radialer Ausdehnung komprimiert wird.

Bevorzugte Ausgestaltungen des erfindungsgemässen Verschlusses für Säulen sind in den abhängigen Ansprüchen 2 bis 6 angegeben.

Der Federmechanismus des Säulenverschlusses sorgt dafür, dass das Säulenbett und gegebenenfalls auf diesem liegende Filter, Fritten oder Siebe in einer abgeschlossenen gefüllten Säule ständig unter Federkraft gehalten werden.

In den Federungsmechanismus ist nicht nur die Dichtung einbezogen und durch diesen regulierbar, sondern es tritt bei auftretenden Totvolumina eine Art Selbstheilung ein, ohne dass eine Steuerung von aussen erforderlich ist.

Durch den die Säule abschliessenden Säulenverschluss wird das Totvolumen sehr gering gehalten oder praktisch vollständig beseitigt. Da über den innenseitigen Federungsmechanismus bei abgeschlossener Säule ständig Federkraft auf das Säulenbett übertragen wird, kann ein etwaiger Volumenschwund in der Säule durch die Kompression des Säulenbettes ständig und unmittelbar ausgeglichen werden. Der Säulenverschluss wirkt insofern «selbstheilend» und dichtend zur gleichen Zeit.

Der Säulenverschluss enthält eine kompressible Dichtung die aus einem kompressiblen Kunststoff besteht und vorzugsweise durch das Federelement und/oder durch das drucküberragende Element in der abgeschlossenen Säule komprimiert wird. Gemäss einer bevorzugten Ausbildung ist die Dichtung selbst Teil des Federungsmechanismus und drückt mit dem Kompressionsdruck auf den Säulenbettabschluss. Aufgrund ihrer eigenen Federkraft leistet sie dabei selbst einen eigenen Beitrag zur «Selbstheilung» und kann geringe Substanzverluste im Säulenbett ausgleichen.

Die kompressible Dichtung besteht aus Kunststoffpolymeren, die unter Berücksichtigung ihrer Kompressibilitäts-, Elastizitäts-, Fliess- und Kriecheigenschaften und Gleitkoeffizienten in Anpassung an die Parameter des Säulenbetriebes, wie die Kompressibilität der Säulenpackung, den Arbeitsdruck und die Arbeitstemperatur usw., ausgewählt werden. Zu besonders geeigneten und deshalb bevorzugten Kunststoffpolymeren gehören Polyäthylen, Polypropylen, Polytetrafluoräthylen und andere gleichwirkende kompressible Kunststoffe. Sie können bis zu etwa 50 Gew.-% Füllstoffe enthalten. Polytetrafluoräthylen, gegebenenfalls mit bis zu etwa 50 Gew.-% Füllstoffen, hat sich insbesondere bei Säulen für HPLC-chromatographische Zwecke ganz hervorragend bewährt, wobei das ungefüllte PTFE eine ausgezeichnete Dichtung gewährleistet.

Die Dichtung hat vorzugsweise die Form eines Ringes oder einer Scheibe, durch die mittig der Kapillarschaft hindurchgeht. Die Dichtung ist so bemessen, dass sie leicht in das Säulenrohr eingeführt werden kann. Ihre Dicke ist sehr variabel; zweckmässige Dicken belaufen sich auf etwa 0,2 mm bis zu mehreren Millimetern. Bereits mit sehr kleinen Dicken werden jedoch schon voll funktionsfähige Dichtungen erhalten, was im Hinblick auf den geringen Materialaufwand bei teuren Kunststoffen ein zusätzlicher Vorteil des hier vorgeschlagenen Aufbaus ist.

Es hat sich besonders bewährt, wenn die Dichtung als Teil des Federungsmechanismus bei abgeschlossener Säule vollständig von dem drucküberragenden Element und dem Säulenrohr eingekammert ist und kein Totvolumen enthält. Bei dieser bevorzugten Ausgestaltung überträgt das drucküberragende Element (6, 6') den von dem Verschlussendstück ausgehenden Druck auf die vollständig eingekammerte Dichtung, wobei sich die Dichtung durch den Druck radial ausdehnt und in die Breite fliesst und ein hermetisches Dichten nach aussen gewährleistet. Aufgrund ihrer Kompressibilität wirkt die Dichtung federnd und überträgt Federdruck auf den Säulenbettabschluss. Durch das Einkammerungsprinzip kann die Dichtung nicht wegfliessen und deshalb wirksam komprimiert werden.

Die Federungseigenschaften des erfindungsgemässen Säulenverschlusses mit dem Federungsmechanismus werden hauptsächlich durch den Elastizitätsmodul des die Dichtung bildenden Kunststoffs, die Dicke der Dichtung und das Federelement bestimmt. Ein besonderer Vorteil der Erfindung ist die grosse Anpassbarkeit des Säulenverschlusses an die Säulenkenndaten und die Betriebsparameter.

Für die Funktion des Säulenverschlusses ist es wichtig, dass die nachfedernden Kräfte so stark sind, dass bei Betrieb der abgeschlossenen Säule unter Arbeitsruck der Säulenbettabschluss nicht gegen die Federkraft abgehoben werden kann. Säulen zur HPLC-Chromatographie werden unter Drücken von etwa 20 bis 250 bar betrieben; der auf das Säulenbett übertragbare Federdruck sollte deshalb zweckmässigerweise grösser sein als dieser Arbeitsdruck. Es hat sich gezeigt, dass Federdrücke, die das 1,2- bis 5fache des Arbeitsdruckes erreichen, einen ungestörten Säulenbetrieb erlauben.

Ein zusätzlicher Vorteil der mit dem Säulenverschluss ausgerüsteten Säulen besteht darin, dass sie sowohl unter hohen als auch unter weniger hohen Drücken voll funktionsfähig sind und bleiben und auch in Verbindung mit Säulen «selbstheilend» wirken, die ein praktisch inkompressibles Bett, wie z.B. aus Kieselgel oder modifiziertem Kieselgel, enthalten. Bei hohen Betriebsdrükken ist die auf das Säulenbett übertragene Federkraft lediglich dementsprechend anzupassen.

Die Erfindung findet Anwendung praktisch für alle Säulen mit den üblichen Durchmessern. Die Innendurchmesser von HPLC-Chromatographiesäulen liegen gewöhnlich bei etwa 4 mm bis 32 mm. Als Materialien für die Säulenrohre können die in den bekannten Säulen verwendeten Werkstoffe, wie Edelstahl, Glas, aber auch mit lösungsmittelbeständigem Kunststoff beschichtete Säulenmaterialien eingesetzt werden. Das drucküberragende Element und die anderen Teile des Federungsmechanismus, ausgenommen die Dichtung, sind gewöhnlich aus Metall, wie Edelstahl, oder einem entsprechenden metallischen Werkstoff oder Kunststoff.

Durch Verwendung eines Federelementes als Teil des Federungsmechanismus wird die Möglichkeit gegeben, einen grösseren Substanzverlust im Säulenbett auszugleichen. Vorzugsweise ist dieses Federelement eine Tellerfeder, die beispielsweise den Druck von einer Überwurfmutter auf ein Druckstück und von diesem auf einen Dichtring überträgt. Das Federelement kann jedoch auch unmittelbar auf der Dichtung aufsitzen.

Die anliegenden Abbildungen I, II, IV, V und VI veranschaulichen lediglich einige, jedoch bevorzugte Ausführungsformen eines erfindungsgemässen Säulenverschlusses, wobei die sich entsprechenden, jedoch nicht notwendigerweise identischen Teile durch gleiche Leitendziffern bezeichnet sind, wie beispielsweise die Dichtung 5 in Fig. I, die Dichtung 5' in Fig. II, die Dichtung 5 in Fig. IV, die Dichtung 5 in Fig. V und die Dichtung 15 in Fig. VI.

Fig. I zeigt das Einlassende einer abgeschlossenen Säule, mit einem dichtenden Verschluss 10, der aus den Teilen 4 bis 9 besteht. Diese Säule ist besonders gut für chromatographische Zwecke wie die HPLC-Chromatographie geeignet. Das Säulenrohr 2 enthält die Säulenpackung 1, die in bekannter Weise durch ein Filter 3 zur Einlassseite hin abgeschirmt wird. Statt des Filters können auch eine Fritte oder ein Sieb verwendet werden. Der Säulenbettabschluss bzw. das Abschlussteil besteht aus einer starren Scheibe 4, die mit geringen Toleranzen in das Säulenrohr 2 passt. An ihrem rückwärtigen Ende ist durch Einpressen, Löten, Kleben oder Verschrauben die Kapillare 9 angebracht. Die Dichtung 5 wird durch einen elastisch verformbaren Ring aus kopressiblem Kunststoffpolymeren gebildet. Das Druckstück bzw. durcküberragende Element 6 kammert den kompressiblen Dichtring 5 vollkommen ein und überträgt den Druck der Überwurfmutter 7 auf die kompressible Dichtung 5. Die Dichtung 5 fliesst unter dem Kompressionsdruck und dichtet auch bei hohen Arbeitsdrücken hermetisch ab. Die Dichtung 5 drückt ausserdem mit dem Kompressionsdruck auf den Säulenbettabschluss bzw. das Abschlussteil 4. Durch das Federelement 8 wird die Nachfederung des Verschlusses 10 wesentlich verstärkt. Nach Fig. I besteht der Nachfederungsmechanismus aus dem Federelement 8, vorzugsweise einer Tellerfeder, dem drucküberragenden Element 6, der Dichtung 5 und dem Abschlussteil 4, die innenseitig in konzentrischer Anordnung um den Schaft der Kapillare 9 und in druckübertragender Beziehung zueinander angeordnet sind.

Bei abgeschlossener Säule wird Federkraft vom Federelement 8 über das drucküberragende Element 6 und die Dichtung 5 auf das Säulenbett 1 übertragen.

Fig. Ia zeigt den Querschnitt entlang der Schnittlinie A–A durch den Säulenverschluss 10 der Fig. I und Fig. Ib einen Längsschnitt entlang der Linie B–B von Fig. I.

In Fig. II ist eine andere Säule mit Säulenverschluss 10' gezeigt, der aus dem Säulenbettabschlussteil 4', der Dichtung 5', dem Druckstück bzw. drucküberragenden Element 6' sowie der Mutter 7, dem Federelement 8 und der Kapillare 9 besteht und dessen Konstruktion eine ringförmige Dichtung 5' enthält, mit der der Anpressdruck pro Flächeneinheit erheblich vergrössert werden kann. Während sich die in Fig. I gezeigte Version vor allem für HPLC-Säulen kleineren Durchmessers (z.B. von ca. 4 mm) eignet, ist der Verschluss 10' nach Fig. II insbesondere für Säulen mit grösserem Durchmesser verwendbar.

Ein zusätzlicher Vorteil der Erfindung besteht darin, dass durch das angewandte Dichtungsprinzip auch Durchmessertoleranzen der Säulenrohre ausgeglichen werden können, da das Dichtungsprinzip für jeden Säulendurchmesser und jeden Druck geeignet ist.

Fig. IV zeigt eine Säule mit einem Säulenverschluss 10'' und Fig. V zeigt eine mit Verschluss 10 abgeschlossene Säule, in der eine Druckschraube bzw. Verschlussschraube 7 benutzt wird und der Säulenverschluss 10 im Innengewinde des Säulenrohrendes sitzt. Die Fig. IV und V veranschaulichen, dass die mechanischen Federelemente (8' in Fig. IV und 8 in Fig. V) an verschiedenen Stellen angebracht werden können. In Fig. IV sind Federn 8' zwischen der Dichtung 5 und dem Druckstück bzw. drucküberragenden Element 6'' angeordnet. Das Federelement 8' besteht normalerweise aus Metall, es können jedoch auch nachfedernd wirkende Scheiben, Blöcke oder Ringe aus Kunststoff sein. In Fig. V sitzt das Federelement 8 ebenso wie in Fig. IV direkt auf dem Dichtring 5 auf.

In Fig. VI ist eine andere Konstruktion einer Säule der Erfindung gezeigt. Ihr Verschluss 20 besteht aus einer Durchgangsmutter bzw. Hülse 17 und einer Verschlussschraube 7, dem Federelement 18, dem drucküberragenden Element 16, der Dichtung 15 und dem Säulenbettabschlussteil 4 sowie der Kapillare 19. Hier wird der Verschluss 20 durch die Verschlussschraube 7 über das Federelement 18 durch Federdruck auf das Säulenbett 1 gedrückt und dieses hierdurch unter Kompression gehalten, während mit der Durchgangsmutter 17 separat auf die Dichtung 15 Druck ausgeübt wird, die unter dem Kompressionsdruck fliesst und die Säule vollständig abdichtet. Bei abgeschlossener Säule ist die innenseitige Dichtung 15 komprimiert und vollständig eingekammert, während der Nachfederungsmechanismus das Säulenbett 1 unter Federkraft hält.

Die Funktion einer Säule der Erfindung mit dem neuen Verschluss (Verschluss nach Fig. I) wird nachfolgend mit einem Beispiel anhand der Verwendung der Säule zur HPLC-Chromatographie erläutert.

Das Ergebnis ist aus dem in Fig. IIIa abgebildeten Chromatogramm abzulesen, insbesondere wenn man das Chromatogramm der Fig. IIIb heranzieht, das unter gleichen Bedingungen mit einer Säule erhalten wurde, die einen herkömmlichen Verschluss hatte. Wie zu ersehen ist, sind in Fig. IIIb die Trennleistung und die Peakhöhen unbefriedigend. Fig. IIIa zeigt das Chromatogramm der gleichen Säule mit einem den erfindungsgemässen Nachfederungsmechanismus aufweisenden Verschluss. Hier ist das Totvolumen am Säulenkopf durch das Nachfedern des Säulenverschlusses beseitigt. Der technische Erfolg der Erfindung tritt besonders dann deutlich hervor, wenn man zunächst die Chromatographie mit einer herkömmlich verschlossenen Säule ausführt und dann den herkömmlichen Verschluss durch einen Verschluss 10, 20 nach der Erfindung ersetzt. Die Säule zeigt danach praktisch wieder die gute Trennleistung einer neuen, voll funktionsfähigen Säule. Sie wird durch den erfindungsgemässen Verschluss 10, 20 geheilt.

Das Chromatogramm Fig. IIIb wurde mit einer Säule vom Innendurchmesser 4,6 mm erhalten, die mit LiChrosorb^R RP 18 (Partikeldurchmesser 10 μm) gefüllt war. Die injizierte Probe von 20 μl enthielt Methyl-, Äthyl-, Propyl-, Butyl- und Pentylbenzoat. Das Eluens war ein Wasser-Methanol-Gemisch (2:7). Diese Säule zeigte mit einem herkömmlichen Verschluss bereits Hohlräume durch Auswaschungen am Säuleneinlass. Wie zu ersehen ist, sind in Fig. IIIb die Trennleistung und die Peakhöhen unbefriedigend. Fig. IIIa zeigt das Chromatogramm der gleichen Säule mit einem den erfindungsgemässen Nachfederungsmechanismus enthaltenden Verschluss gemäss Fig. I.

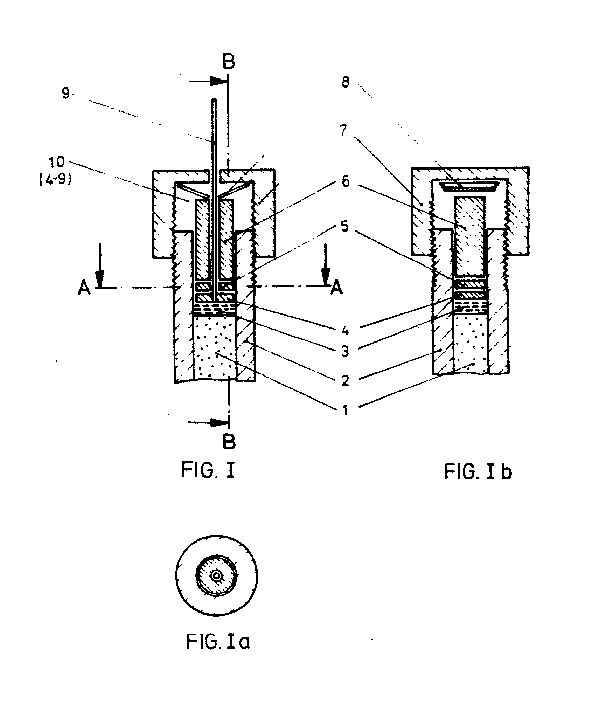

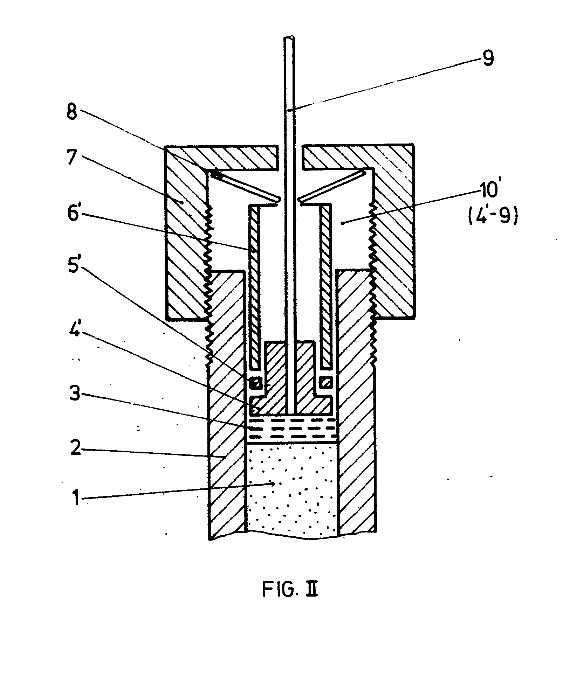

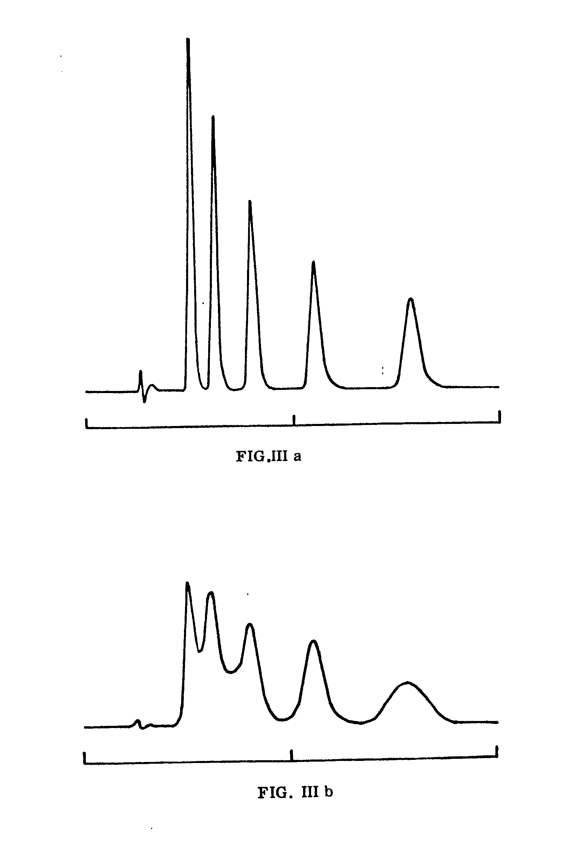

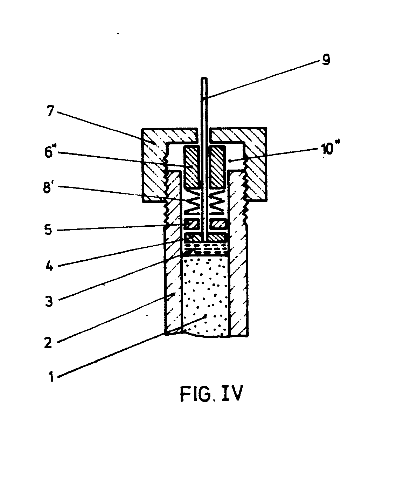

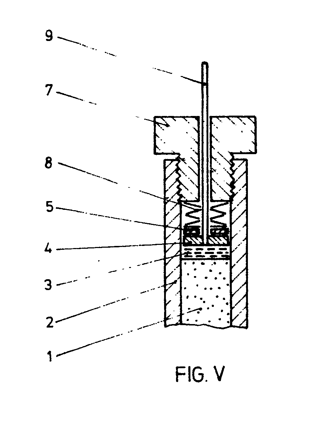

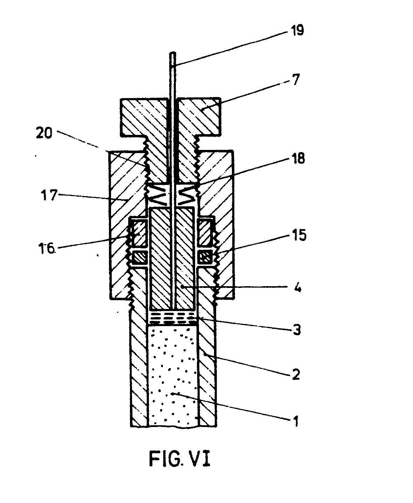

**Patentansprüche**

1. Verschluss für Säulen, die mit einer Säulenpackung aus einem chromatographischen oder katalytisch aktiven oder ionen- und/oder elektronenaustauschenden oder elektro-phoretischen oder biologisch aktiven Material gefüllt sind, mit

– einem mit Innen- oder Aussengewinde versehenen, in bzw. auf die Säule schraubbaren Verschlussendstück (7; 7, 17),

– einer das Verschlussendstück mittig durchziehenden Kapillare (9, 19),

– einer Dichteinrichtung (5, 5', 15) zur Abdichtung des Inneren der Säule (2) gegen die Umgebung, dadurch gekennzeichnet, dass

– ein sich an dem Verschlussendstück (7; 7, 17) abstützender Federmechanismus vorgesehen ist, der ein am Austrittsende der Kapillare (9, 19) konzentrisch zu dieser befestigtes starres Abschlussteil (4, 4') für die Säulenpackung (1) sowie ein zwischen dem Verschlussendstück und dem Abschlussteil ebenfalls konzentrisch bezüglich der Kapillare angeordnetes Federelement (8, 8', 18) aufweist, mittels dessen das Abschlussteil beim Auf- bzw. Einschrauben des Verschlussendstücks derart belastbar ist, dass der über das Abschlussteil auf die Säulenpackung (1) ausgeübte Druck grösser als deren Arbeitsdruck ist, und

– die Dichteinrichtung eine Dichtung (5, 5', 15) aus kompressiblem Kunststoff aufweist, die konzentrisch bezüglich der Kapillare (9, 19) derart zwischen dem Verschlussendstück (7; 7, 17) und dem Abschlussteil (4, 4') angeordnet ist, dass sie beim Auf- bzw. Einschrauben des Verschlussendstücks unter radialer Ausdehnung komprimiert wird.

2. Verschluss nach Anspruch 1, dadurch gekennzeichnet, dass der Federmechanismus ein konzentrisch bezüglich der Kapillare (9) angeordnetes druckübertragendes Element (6, 6', 6'') aufweist, das entweder zwischen dem Federelement (8) und dem Abschlussteil (4, 4') oder zwischen dem Verschlussendstück (7) und dem Federelement (8') angeordnet ist, und dass die Dichtung (5, 5') zwischen dem Abschlussteil (4, 4') und dem druckübertragenden Element (6, 6') bzw. zwischen dem Abschlussteil (4) und dem Federelement (8) derart angeordnet ist, dass sie von diesen Elementen direkt mit Druck beaufschlagbar ist.

3. Verschluss nach Anspruch 1, dadurch gekennzeichnet, dass sich das Federelement (8) unmittelbar am Verschlussendstück (7) abstützt, und dass die Dichtung (5) zwischen Federelement (8) und Abschlussteil (4) derart angeordnet ist, dass sie von dem Federelement mit Druck beaufschlagbar ist.

4. Verschluss nach Anspruch 1, dadurch gekennzeichnet, dass das Verschlussendstück eine Hülse (17) mit Innengewinde sowie eine in das eine Ende der Hülse einschraubbare Verschlussschraube (7) aufweist, durch die die Kapillare (19) geführt ist, und dass das auf die Säule aufschraubbare andere Ende der Hülse eine Ausdrehung aufweist, in der ein ringförmig ausgebildetes druckübertragendes Element (16) sowie die ebenfalls ringförmig ausgebildete Dichtung (15) derart axial hintereinander angeordnet sind, dass sie das Abschlussteil (4) jeweils konzentrisch umfassen.

5. Verschluss nach einem der Ansprüche 1 bis 4, dadurch gekennzeichnet, dass die Dichtung (5, 5', 15) aus einem Kunststoff aus der Gruppe der Polytetrafluoräthylene und bis zu etwa 50 Gew.-% Füllstoffe enthaltenden Polytetrafluoräthylene besteht.

6. Verschluss nach einem der Ansprüche 1 bis 5, dadurch gekennzeichnet, dass der Federdruck bei abgeschlossener Säule das 1,2fache bis 5fache des Säulenarbeitsdruckes erreicht.

**Claims**

1. Closure assembly for columns filled with a packing comprising a chromatographically or catalytically active material or with an ion and/or electron exchange material or with an electrophoretically or biologically active material, the assembly comprising a closure member (7; 7, 17) threaded internally or externally for threaded engagement with the column, a capillary tube (9, 19) extending centrally through the closure assembly, and means (5, 5', 15) for sealing the interior of column (2) from the environment, characterized by a spring mechanism bearing against closure member (7; 7, 17) and comprising a rigid terminating element (4, 4') for packing (1), said terminating element being mounted at the discharge end of capillary tube (9, 19) in a concentric relationship therewith, and a spring element (8, 8', 18) disposed between the closure member and the terminating element also in a concentric relationship with the capillary tube, said spring means being adapted to load the terminating element as the closure member is being threaded onto or into the column, the loading being such that the pressure exerted via the terminating member on packing (1) is higher than the operating pressure of the packing, and by the sealing means comprising a gasket (5, 5', 15) made of a compressible synthetic material and mounted concentrically relative to capillary tube (9, 19) between closure element (7; 7, 17) and terminating member (4, 4') to be compressed and to expand radially as the closure element is threaded onto or into the column.

2. Closure assembly as in claim 1, characterized in that said spring mechanism includes a pressure-transmitting element (6, 6', 6'') disposed concentrically relative to capillary tube (9) and either between spring element (8) and terminating member (4, 4') or between closure member (7) and spring element (8'), and in that gasket (5, 5') is disposed between terminating member (4, 4') and pressure-transmitting element (6, 6'), or between terminating member (4) and spring element (8), respectively, in a manner such that the respective elements may exert pressure directly on the gasket.

3. Closure assembly as in claim 1, characterized by spring element (8) bearing directly on closure member (7) and by gasket (5) being disposed between spring element (8) and terminating member (4) in a manner such that said spring element may exert pressure directly on the gasket.

4. Closure assembly as in claim 1, characterized by said closure member comprising an internally threaded tube member (17) and a closure screw (7) adapted to be threaded into one end of said tube member and receiving capillary tube (19) therethrough, and by the other end of said tube member being adapted to be threaded onto the column and being recessed to receive an annular pressure-transmitting member (16) as well as gasket (15), which also is annular in shape, one behind the other in an axial direction so that both concentrically encircle terminating member (4).

5. Closure member as in any one of claims 1 to 4, characterized by sealing member (5, 5', 15) consisting of a synthetic material selected from the group comprising the polytetrafluoroethylenes and polytetrafluoroethylenes loaded with up to about 50 wt.% of a filler material.

6. Closure assembly as in any one of claims 1 to 5, characterized by said spring pressure being 1.2 to 5 times the column operating pressure under closed column conditions.

**Revendications**

1. Dispositif d'obturation pour colonnes remplies d'une garniture constituée d'une substance chromatographique ou catalitique active ou d'une substance active échangeuse d'ions et/ou d'électrons ou électrophorétique ou biologique, comprenant
– un embout d'obturation (7, 7, 17) pourvu d'un filetage intérieur ou extérieur, susceptible d'être vissé respectivement sur ou dans la colonne,
– un tube capillaire (9, 19) traversant l'embout d'obturation en son milieu,
– un dispositif d'étanchéité (5, 5', 15) assurant l'étanchéité de l'intérieur de la colonne (2) par rapport à son environnement, caractérisé en ce qu'il est prévu
– un mécanisme élastique prenant appui contre l'embout d'obturation (7, 7, 17), le mécanisme comportant une pièce de séparation (4, 4') de la garniture (1) de la colonne, fixée rigidement et concentrique à l'extrémité de sortie du tube capillaire (9, 19) ainsi qu'un élément élastique (8, 8', 18) disposé, de façon également concentrique par rapport au tube capillaire, entre l'embout d'obturation et la pièce de séparation, au moyen desquels la pièce de séparation peut être chargée, au cours du vissage ou du dévissage de l'embout d'obturation, de telle manière que la pression exercée par la pièce de séparation sur la garniture (1) de la colonne est plus grande que sa pression de service, et en ce que
– le dispositif d'étanchéité comporte un joint d'étanchéité (5, 5', 15) en matière plastique compressible, disposé de façon concentrique par rapport au tube capillaire (9, 19), et de telle manière entre l'embout d'obturation (7, 7, 17) et la pièce de séparation (4, 4'), qu'il soit comprimé, par extension radiale, au cours du vissage ou du dévissage de l'embout d'obturation.

2. Dispositif d'obturation selon la revendication 1, caractérisé en ce que le mécanisme élastique comporte un élément transmetteur de pression (6, 6', 6'') concentrique par rapport au tube capillaire (9), disposé soit entre l'élément élastique (8) et la pièce de séparation (4, 4') soit entre l'embout d'obturation (7) et l'élément élastique (8'), et en ce que le joint d'étanchéité (5, 5') est disposé de telle manière entre la pièce de séparation (4, 4') et l'élément transmetteur de pression (6, 6') ou entre la pièce de séparation (4) et l'élément élastique (8), qu'il soit soumis directement à la pression de ces éléments.

3. Dispositif d'obturation selon la revendication 1, caractérisé en ce que l'élément élastique (8) s'appuie directement contre l'embout d'obturation (7) et en ce que le joint d'étanchéité (5) est disposé de telle manière entre l'élément élastique (8) et la pièce de séparation (4), qu'il soit soumis à la pression de l'élément élastique.

4. Dispositif d'obturation selon la revendication 1, caractérisé en ce que l'embout d'obturation présente une douille (17) filetée intérieurement ainsi qu'une vis d'obturation (7) susceptible d'être vissée dans une extrémité de la douille et traversée par le tube capillaire (19), et en ce que l'autre extrémité de la douille venant se visser sur la colonne présente un alésage dans lequel un élément transmetteur de pression (16) annulaire ainsi qu'un joint d'étanchéité (15) également annulaire sont montés successivement dans le sens axial, de telle manière qu'ils entourent chacun, de façon concentrique, la pièce de séparation (4).

5. Dispositif d'obturation selon l'une des revendications 1 à 4, caractérisé en ce que le joint d'étanchéité (5, 5', 15) est constitué d'une matière plastique du groupe des polytétrafluoréthylènes et du polytétrafluoréthylène contenant jusqu'à environ 50% poids de matières de remplissage.

6. Dispositif d'obturation selon l'une des revendications 1 à 5, caractérisé en ce que, après obturation de la colonne la pression élastique atteint 1,2 fois à 5 fois la pression de service de la colonne.

B

9

10
(4-9)

8

7

6

A ——— A

5

4

3

2

1

B

FIG. I

FIG. I b

FIG. I a

FIG. II

FIG.III a

FIG. III b

FIG. IV

FIG. V

FIG. VI